# EUROPÄISCHE PATENTANMELDUNG

(11) **EP 0 767 318 A2**
(43) Veröffentlichungstag der Anmeldung: **09.04.1997**
(21) Anmeldenummer: 96115878.9
(22) Anmeldetag: 03.10.1996
(51) Int. Cl.: F16F 3/093, F16F 1/376, F16F 1/377, E02D 27/44

(54) **Matten- oder leistenförmiger Schwingungsdämpfer aus dauerelastischem Werkstoff**

(30) Priorität: 06.10.1995 DE 19537321
(71) Anmelder: INTEC AACHEN INNOVATIVE TECHNOLOGIEN FÜR DIE BAUSANIERUNG, Dr. Honsinger & Dr. Breitbach, 52068 Aachen (DE)
(72) Erfinder: Honsinger, Detlef, Dr., 52134 Herzogenrath (DE); Breitbach, Manfred, Dr., 52074 Aachen (DE)
(74) Vertreter: König, Werner, Dipl.-Ing.

(57) **Zusammenfassung**

Es ist ein matten- oder leistenförmiger Schwingungsdämpfer als Lagerelement für Bauwerksteile, Maschinen und dergleichen, betroffen, der mindestens zwei übereinander angeordnete separate Lagen (1,8;20,21,22) hat. Mindestens eine von zwei unmittelbar übereinanderliegenden Lagen (1,8;20,21,22) besteht aus einem dauerelastischen Werkstoff. Die Lagen (1,8;20,21,22) sind an den einander zugewandten Seiten mit parallel zueinander verlaufenden Stegen (2,10;23,24) und Rinnen (3,11) versehen, wobei die Stege (2,10;23,24) und Rinnen (3,11) jeweils zwei zueinander geneigt verlaufende Seitenflächen (7,14;16) haben und bei übereinander angeordneten Lagen (1,8;20,21,22) ineinandergreifen. Die Breite der Stege (2,10;23,24) an ihrer Spitze ist größer als die Breite der Rinnen (3,11) auf ihrem Grund. Unmittelbar übereinanderliegende Lagen (1,8;20,21,22) haben zumindest in den einander zugewandten Bereichen voneinander abweichende Härte.

## Beschreibung

Die Erfindung betrifft einen matten- oder leistenförmigen Schwingungsdämpfer als Lagerelement für Bauwerksteile, Maschinen und dergleichen.

Es ist bereits ein Schwingungsdämpfer in Form einer Profilleiste bekannt (DE 34 46 831), bei dem in zwei Reihen längs durchlaufende Ausnehmungen vorgesehen sind, die jeweils als Vieleck mit schräg gegen die Auflagefläche gerichteten Seitenwänden versehen sind, welche mit hierauf abgestimmten schräg eingezogenen Seitenkanten in Verbindung stehen. Die zwischen den Ausnehmungen verbleibenden massiven Blöcke von entsprechend nach außen sich erweiternder Querschnittsform bilden infolgedessen einzeln bewegliche, aber untereinander zusammenhängende Druckstempel, die unter Belastung der Federkörper Vertikalbewegungen ausführen können.

Dieser bekannte Schwingungsdämpfer ist einstückig ausgebildet und besteht nur aus einem Material. Er ist infolgedessen nur in der Lage, die Dämpfungswirkung durch reine Materialdämpfung sowie eine nicht definierte Deformationsarbeit zu erzielen. Damit ist er auf einen bestimmten Frequenzbereich beschränkt. Die Verformungsarbeit der einzelnen Profilkomponenten ist praktisch nicht zu definieren, so daß eine Anpassung an die technische Dämpfungsaufgabe nur höchst ungenau zu bewerkstelligen ist.

Es sind auch mehrteilige Schwingungsdämpfer bekannt. So ist mit der DE-OS 28 16 616 ein Schwingungsdämpfer mit zwei aufeinanderliegenden Teilen bekannt, die mit ineinandergreifenden Vorsprüngen und Ausnehmungen versehen sind. Die Vorsprünge und Ausnehmungen sollen sich unterschiedlich verjüngen und sich so im unbelasteten Zustand zunächst nur entlang einer Linie und nicht großflächig berühren.

Durch das DE-GM 74 17 627 ist ein plattenförmiger Schwingungsdämpfer bekannt, der auf einer Seite Reihen von Rippen und Noppen und auf der Gegenseite entsprechende Ausnehmungen aufweist, so daß die Platten in größerer Anzahl übereinandergelegt werden können.

Auch bei diesen Lösungen ist keine definierte Deformationsarbeit und keine Dämpfung über ein größeres Frequenzspektrum erreichbar.

Demgegenüber liegt der vorliegenden Erfindung die Aufgabe zugrunde, einen Schwingungsdämpfer der eingangs erwähnten Art zu schaffen, bei dem unter Last die einzelnen Lagerkomponenten definiert beansprucht werden und die Dämpfungswirkung vor allem über Schubverformung von dauerelastischem Material erzielt wird. Dabei sollen Dämpfungsaufgaben über einen breiten Frequenzbereich gelöst werden.

Diese Aufgabe wird erfindungsgemäß bei einem Schwingungsdämpfer der eingangs erwähnten Art dadurch gelöst, daß er mindestens zwei übereinander angeordnete separate Lagen hat, daß mindestens eine von zwei unmittelbar übereinanderliegenden Lagen aus einem dauerelastischen Werkstoff besteht, daß die Lagen an den einander zugewandten Seiten mit parallel zueinander verlaufenden Stegen und Rinnen versehen sind, daß die Stege und Rinnen jeweils zwei zueinander geneigt verlaufende Seitenflächen haben und bei übereinander angeordneten Lagen ineinandergreifen, daß die Breite der Stege an ihrer Spitze größer ist als die Breite der Rinnen auf ihrem Grund und daß unmittelbar übereinanderliegende Lagen zumindest in den einander zugewandten Bereichen voneinander abweichende Härte haben.

Die erfindungsgemäßen Härteunterschiede bewirken, daß sich eine Lage bevorzugt elastisch verformt. Bei dauerelastischen Werkstoffen, z.B. Elastomeren, hat sich die Werkstoffeigenschaft der Härte als eine Größe zur Beschreibung des elastischen Verhaltens und der Steifigkeit bewährt.

Die unter Last zu erwartenden Beanspruchungen und Verformungen sind eindeutig zu beschreiben.

Die Höhen der zusammenarbeitenden Stege und Rinnen können gleich sein oder voneinander abweichen.

Mit einer Lage aus dauerelastischem Werkstoff kann eine Lage z.B. aus Holz, Papierwerkstoff, schaumartigen Stahllegierungen, Formglas, Beton oder anderen Werkstoffen zusammenarbeiten.

Der erfindungsgemäße Schwingungsdämpfer kann so ausgebildet sein, daß alle Lagen aus einem Polymer bestehen.

Der erfindungsgemäße Schwingungsdämpfer kann so ausgebildet sein, daß mindestens eine Lage aus Stahl besteht. Diese Lage kann dann unmittelbar die Basis einer Maschine sein.

Der erfindungsgemäße Schwingungsdämpfer kann so ausgebildet sein, daß die unterste sowie die oberste Lage eine ebene Außenfläche haben. Dies kann den Einbau des Schwingungsdämpfer vereinfachen.

Der erfindungsgemäße Schwingungsdämpfer kann so ausgebildet sein, daß die unterste sowie die oberste Lage profilierte Außenflächen haben. Dies vereinfacht die Plazierung und Halterung des Schwingungsdämpfers.

Der erfindungsgemäße Schwingungsdämpfer kann so ausgebildet sein, daß die Stege und Rinnen symmetrisches Profil haben.

Der erfindungsgemäße Schwingungsdämpfer kann so ausgebildet sein, daß die Seitenflächen der Rinnen und Stege zu ihrer Längsmittelebene um 30° bis 70°, bevorzugt um 60° ± 10°, geneigt sind.

Der erfindungsgemäße Schwingungsdämpfer kann so ausgebildet sein, daß die Stege im Übergangsbereich zwischen Seiten- und Stirnfläche gerundet sind. Auf diese Weise wird der für die Verformung des Materials zur Verfügung stehende Bereich vergrößert.

Der erfindungsgemäße Schwingungsdämpfer kann so ausgebildet sein, daß die Stege im Bereich ihres Fußes zu beiden Seiten eine Hinterschneidung aufweisen. Auch dies dient der Vergrößerung des aufzunehmenden Verformungsvolumens. Ein im wesentlichen gleicher Effekt wird dadurch erreicht, daß die Rinnen im Bereich ihres Grundes zu beiden Seiten eine Hinterschneidung aufweisen.

Der erfindungsgemäße Schwingungsdämpfer kann so ausgebildet sein, daß eine der beiden äußeren Lagen von dem Bauwerksteil, der Maschine oder dergleichen gebildet ist.

Der erfindungsgemäße Schwingungsdämpfer kann so ausgebildet sein, daß mindestens eine Lage beidseitig mit Stegen oder Rinnen versehen ist.

Der erfindungsgemäße Schwingungsdämpfer kann so ausgebildet sein, daß mindestens in einer Lage die Härte im Bereich der Oberseite von der im Bereich der Unterseite abweicht.

Der erfindungsgemäße Schwingungsdämpfer kann so ausgebildet sein, daß bei einer Ausbildung mit mehr als zwei Lagen die parallel zueinander verlaufenden Stege und Rinnen zwischen zwei benachbarten Lagen relativ zu den Stegen und Rinnen zwischen anderen benachbarten Lagen in einer parallelen Ebene gedreht verlaufen. Dabei verlaufen also die parallelen Längsachsen von Stegen und Rinnen zwischen zwei Lagen geneigt oder gedreht zu den zueinander parallelen Längsachsen in einer anderen Ebene des Schwingungsdämpfers. Dabei können verschiedene Komponenten von Horizontallasten z. B. aus Maschinenbetrieb aufgenommen werden. Eine solche Ausbildung ist insbesondere dann zweckmäßig, wenn ungleich gerichtete Schwingungserreger vorliegen.

Der erfindungsgemäße Schwingungsdämpfer kann so ausgebildet sein, daß die einander zugewandten Bereiche unmittelbar übereinanderliegender Lagen eine zumindest um 10° Shore A voneinander abweichende Härte haben.

Der erfindungsgemäße Schwingungsdämpfer kann schließlich so ausgebildet sein, daß die Lagen Strangprofile sind.

Im folgenden Teil der Beschreibung werden einige Ausführungsformen des erfindungsgemäßen Schwingungsdämpfers anhand von Zeichnungen beschrieben. Es zeigt:
- Fig. 1: einen Schnitt durch eine erste Ausführungsform der Erfindung mit zwei übereinanderliegenden mattenförmig ausgebildeten Lagen,
- Fig. 2: einen Teilschnitt durch zwei Lagen, welcher das Ineinandergreifen von Steg und Rinne von zwei Lagen gemäß einer weiteren Ausführungsform veranschaulicht,
- Fig. 3: einen Teilschnitt, welcher in anderer Ausführungsform das Ineinandergreifen von Steg und Rinne von zwei Lagen zeigt und
- Fig. 4: einen Teilschnitt durch eine weitere Ausführungsform des erfindungsgemäßen Schwingungsdämpfers mit drei Lagen.

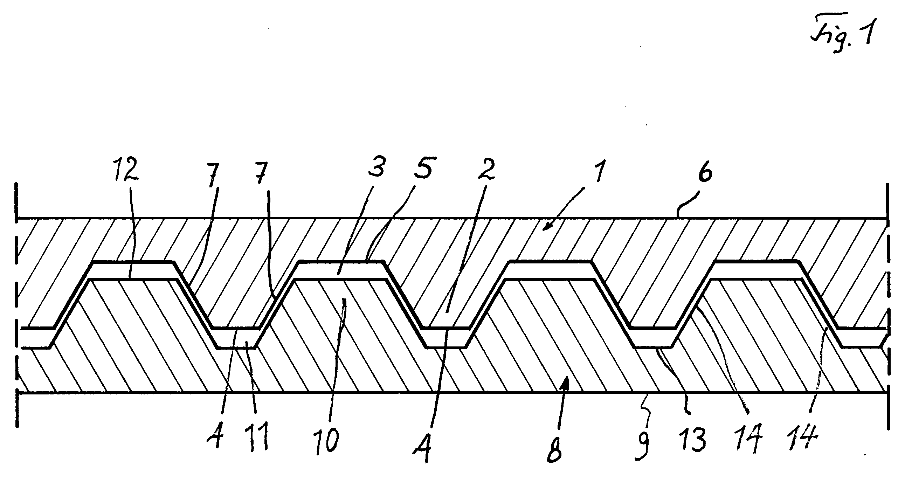

Die Ausführungsform nach Fig. 1 zeigt eine obere mattenförmige Lage 1, die auf ihrer Unterseite mit Stegen 2 und Rinnen 3 versehen ist. Die Stege 2 haben eine ebene Spitze oder Abschlußfläche 4, und die Rinnen 3 weisen einen ebenen Grund 5 auf. Die obere Lage 1 hat zudem eine ebene Außenfläche 6, die geriffelt oder anderweitig profiliert ausgebildet sein kann.

Die obere Lage 1 besteht bevorzugt aus einem Polymer hoher Härte, kann aber auch die Basisplatte eines Bauteils oder einer Maschine sein und demzufolge z.B. aus Beton oder Stahl bestehen.

Die Stege 2 sind in Bezug auf eine normal zur Außenfläche 6 und dabei in Längsrichtung der Stege 2 verlaufende Ebene symmetrisch ausgebildet. Sie haben zwei Seitenflächen 7, welche ausgehend von den Gründen der benachbarten Rinnen 3 in Richtung auf die Abschlußfläche 4 des Steges 2 aufeinanderzu geneigt verlaufen.

Der mattenförmige Schwingungsdämpfer nach Fig. 1 ist ferner mit einer unteren Lage 8 versehen, die eine ebene Außenfläche 9 hat, welche in üblicher Weise profiliert ausgeführt sein kann.

Die untere Lage 8 hat Stege 10 und Rinnen 11. Die Stege 10 haben auch hier ebene Spitzen oder Abschlußflächen 12. Die Rinnen 11 haben jeweils einen ebenen Grund 13. Auch hier werden die Stege 10 durch Seitenflächen 14 begrenzt, die auch hier in Richtung auf die Abschlußfläche 12 des jeweiligen Steges 10 aufeinanderzu geneigt sind.

Die Neigung der Seitenflächen 14 der Stege 10 der unteren Lage 8 entspricht im wesentlichen der Neigung der Seitenflächen 7 der Stege 2 der oberen Lage. Dabei sind aber die Abschlußflächen 4 der Stege 2 der oberen Lage 1 sowie die Abschlußflächen 12 der Stege 10 der unteren Lage größer als der Grund 5 bzw. 13 der Rinnen 3 bzw. 11.

Die obere Lage 1 und die untere Lage 8 können übereinandergelegt werden, wobei die Stege 2, 10 jeweils in die Rinnen 11, 3 der jeweils anderen Lage eingreifen. Dabei verbleibt aufgrund der Breitenunterschiede zwischen den Abschlußflächen der Stege einerseits und dem Grund der Rinnen 3 andererseits ein Zwischenraum, in den hinein sich das Material der Lagen 1 und 2 bei Belastung verformen kann. Das Material kann sich auch bei planmäßiger oder unplanmäßiger Überbeanspruchung, z.B. bei Reparaturarbeiten an Maschinen oder bei Anwendungen im Bauwesen, verformen und einen Formschluß erzeugen, so daß der Schwingungsdämpfer dann eine plattenartige Tragwirkung mit sehr hoher Lastabtragung ermöglicht.

Die untere Lage besteht aus einem Polymer, dessen Shore A-Härte mindestens um 10° niedriger ist als die der oberen Lage 1.

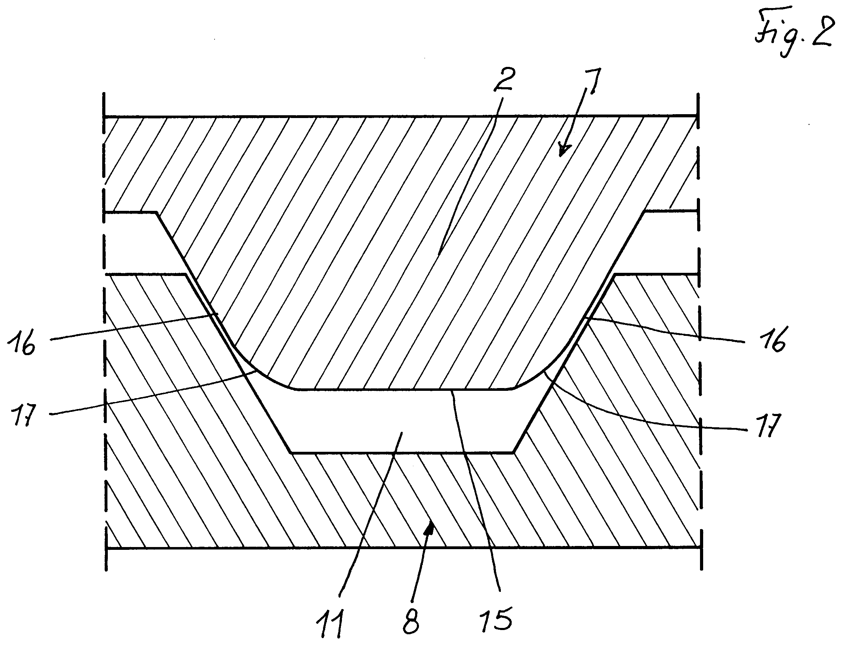

Fig. 2 zeigt das Ineinandergreifen des Steges 2 einer oberen Lage 1 und einer Rinne 11 der unteren Lage 8. Während gemäß Fig. 1 die Abschlußflächen 4 mit den anschließenden Seitenflächen 7 eine deutliche Kante bilden, ist gemäß Fig. 2 der Übergang zwischen Abschlußfläche 15 und Seitenflächen 16 des Steges 2 bei 17 gerundet, so daß hier ein größerer Raum zur Aufnahme des Verdrängungsvolumens bei Druckbelastung des Schwingungsdämpfers bereitsteht.

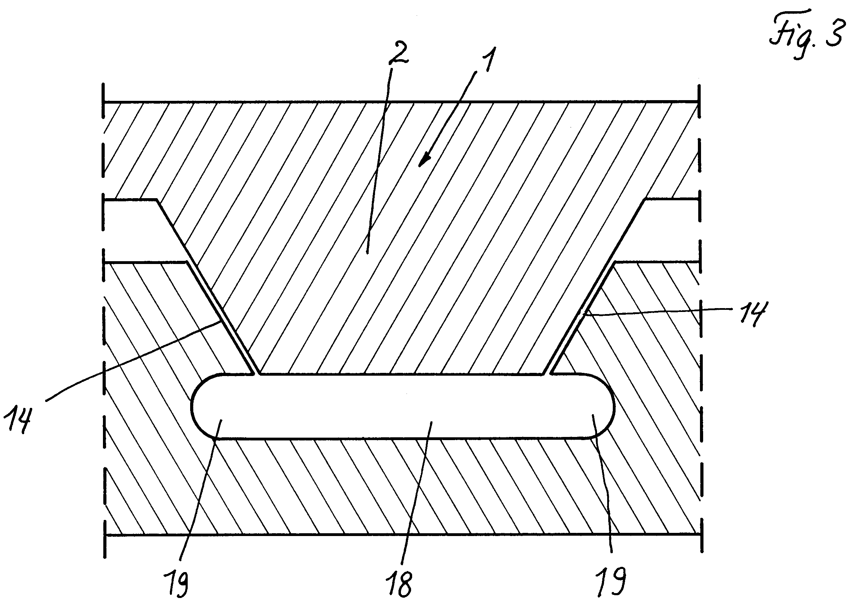

Bei der Ausführungsform gemäß Fig. 3 ist die obere Lage 1 einschließlich der Stege 2 so ausgebildet, wie in Fig. 1 dargestellt. Eine Abweichung gegenüber der Ausführungsform gemäß Fig. 1 liegt hier darin vor, daß die Rinnen im Bereich ihres Grundes 18 über die Seitenflächen 14 der Rinnen 11 seitlich erweitert sind. Diese Erweiterungen 19 können als Hinterschneidungen der Seitenflächen 14 aufgefaßt werden. Sie dienen dazu, den Raum für das verdrängte Volumen zu vergrößern.

Bei den Ausführungsformen nach den Figuren 1 bis 3 bilden jeweils zwei Lagen den Schwingungsdämpfer. Dabei ist jede einzelne Lage für sich aus einem Werkstoff hergestellt, und der Härteunterschied zwischen den beiden Lagen ist jeweils größer als 10° Shore A.

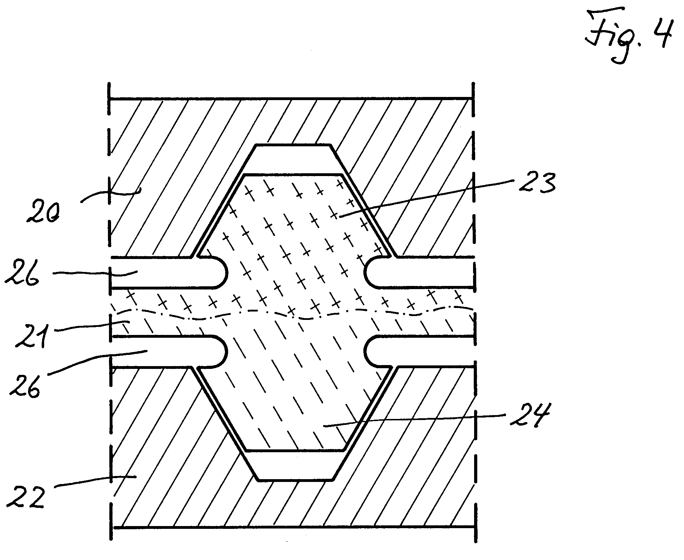

Fig. 4 nun zeigt eine Ausführungsform mit drei Lagen. Dabei sind eine obere Lage 20, eine mittlere Lage 21 und eine untere Lage 22 vorgesehen. Die obere Lage 20 ist so ausgebildet, wie dies anhand von Fig. 1 beschrieben wurde. Die untere Lage 22 ist gemäß Fig. 4 der oberen Lage 22 spiegelbildlich gleich. Die mittlere Lage 21 ist dagegen beiderseits einer Mittelebene gleich ausgebildet, d.h. beiderseits dieser Mittelebene sind in entgegengesetzten Richtungen vorstehende Stege 23, 24 und dazwischen Rinnen vorgesehen. Diese Rinnen sind mit einem verbreiterten Grund 26 versehen, wie dies für eine einseitige Lage in Fig. 3 bereits dargestellt ist.

Die mittlere Lage 21 hat beiderseits ihrer Mittelebene abweichende Härten. Auch hier gilt für jeden Übergang von einer Lage zur anderen ein Härteunterschied von mindestens 10° Shore A.

Im dargestellten Ausführungsbeispiel ist die Lage 21 zu ihrer Mittelebene symmetrisch ausgebildet, so daß z.B. einem nach oben vorstehenden Steg 23 ein entsprechend ausgebildeter nach unten vorstehender Steg 24 gegenübersteht. Die mittlere Lage 21 kann aber auch so ausgebildet sein, daß die Stege und damit die zwischen ihnen angeordneten Rinnen beiderseits der Mittelebene gegeneinander seitlich versetzt sind. Es ist auch möglich, daß die Stege und Rinnen beiderseits der Mittelebene der mittleren Lage 21 gedreht zueinander verlaufen. Diese Ausführung kann insbesondere dann zweckmäßig sein, wenn der Schwingungsdämpfer gleichzeitig gegen unterschiedlich gerichtete Schwingungserreger wirksam sein soll, z.B. gegen ein rotierendes Werkzeug einer Werkzeugmaschine und gegen den nicht parallel dazu angeordneten Motor dieser Maschine.

## Patentansprüche

1. Matten- oder leistenförmiger Schwingungsdämpfer als Lagerelement für Bauwerksteile, Maschinen und dergleichen,
**dadurch gekennzeichnet,**
• daß er mindestens zwei übereinander angeordnete separate Lagen (1,8;20,21,22) hat,
• daß mindestens eine von zwei unmittelbar übereinanderliegenden Lagen (1,8;20,21,22) aus einem dauerelastischen Werkstoff besteht,
• daß die Lagen (1,8;20,21,22) an den einander zugewandten Seiten mit parallel zueinander verlaufenden Stegen (2,10;23,24) und Rinnen (3,11) versehen sind,
• daß die Stege (2,10;23,24) und Rinnen (3,11) jeweils zwei zueinander geneigt verlaufende Seitenflächen (7,14;16) haben und bei übereinander angeordneten Lagen (1,8;20,21,22) ineinandergreifen,
• daß die Breite der Stege (2,10;23,24) an ihrer Spitze größer ist als die Breite der Rinnen (3,11) auf ihrem Grund und
• daß unmittelbar übereinanderliegende Lagen (1,8;20,21,22) zumindest in den einander zugewandten Bereichen voneinander abweichende Härte haben.

2. Schwingungsdämpfer nach Anspruch 1, dadurch gekennzeichnet, daß alle Lagen (1,8;20,21,22) aus einem Polymer bestehen.

3. Schwingungsdämpfer nach einem der vorhergehenden Ansprüche, dadurch gekennzeichnet, daß mindestens eine Lage (1,8;20,21,22) aus Stahl besteht.

4. Schwingungsdämpfer nach einem der vorhergehenden Ansprüche, dadurch gekennzeichnet, daß die unterste sowie die oberste Lage (1,8;20,22) eine ebene Außenfläche haben.

5. Schwingungsdämpfer nach einem der vorhergehenden Ansprüche, dadurch gekennzeichnet, daß die unterste sowie die oberste Lage (1,8;20,22) profilierte Außenflächen haben.

6. Schwingungsdämpfer nach einem der vorhergehenden Ansprüche, dadurch gekennzeichnet, daß die Stege (2,10;23,24) und Rinnen (3,11) symmetrisches Profil haben.

7. Schwingungsdämpfer nach einem der vorhergehenden Ansprüche, dadurch gekennzeichnet, daß die Seitenflächen (7,14;16) der Rinnen (3,11) und Stege (2,10;23,24) zu ihrer Längsmittelebene um 30° bis 70° geneigt sind.

8. Schwingungsdämpfer nach einem der vorhergehenden Ansprüche, dadurch gekennzeichnet, daß die Seitenflächen (7,14;16) der Rinnen (3,11) und Stege (2,10;23,24) zu ihrer Längsmittelebene um 60° ± 10° geneigt sind.

9. Schwingungsdämpfer nach einem der vorhergehenden Ansprüche, dadurch gekennzeichnet, daß die Stege (2,10;23,24) im Übergangsbereich zwischen Seiten- und Stirnfläche gerundet sind.

10. Schwingungsdämpfer nach einem der vorhergehenden Ansprüche, dadurch gekennzeichnet, daß die Stege (2,10;23,24) im Bereich ihres Fußes zu beiden Seiten eine Hinterschneidung aufweisen.

11. Schwingungsdämpfer nach einem der vorhergehenden Ansprüche, dadurch gekennzeichnet, daß die Rinnen (3,11) im Bereich ihres Grundes zu beiden Seiten eine Hinterschneidung aufweisen.

12. Schwingungsdämpfer nach einem der vorhergehenden Ansprüche, dadurch gekennzeichnet, daß eine der beiden äußeren Lagen (1,8;20,21,22) von dem Bauwerksteil, der Maschine oder dergleichen gebildet ist.

13. Schwingungsdämpfer nach einem der vorhergehenden Ansprüche, dadurch gekennzeichnet, daß mindestens eine Lage (1,8;20,21,22) beidseitig mit Stegen oder Rinnen (3,11) versehen ist.

14. Schwingungsdämpfer nach einem der vorhergehenden Ansprüche, dadurch gekennzeichnet, daß mindestens in einer Lage (1,8;20,21,22) die Härte im Bereich der Oberseite von der im Bereich der Unterseite abweicht.

15. Schwingungsdämpfer nach einem der vorhergehenden Ansprüche, dadurch gekennzeichnet, daß bei einer Ausbildung mit mehr als zwei Lagen (1,8;20,21,22) die parallel zueinander verlaufenden Stege (2,10;23,24) und Rinnen (3,11) zwischen zwei benachbarten Lagen (1,8;20,21,22) relativ zu den Stegen und Rinnen (3,11) zwischen anderen benachbarten Lagen (1,8;20,21,22) in einer parallelen Ebene gedreht verlaufen.

16. Schwingungsdämpfer nach einem der vorhergehenden Ansprüche, dadurch gekennzeichnet, daß die einander zugewandten Bereiche unmittelbar übereinanderliegender Lagen (1,8;20,21,22) eine zumindest um 10° Shore A voneinander abweichende Härte haben.

17. Schwingungsdämpfer nach einem der vorhergehenden Ansprüche, dadurch gekennzeichnet, daß die Lagen (1,8;20,21,22) Strangprofile sind.
